Europäisches Patentamt

European Patent Office

Office européen des brevets

(19)

(11) Veröffentlichungsnummer : **0 194 422**
**B1**

(12) **EUROPÄISCHE PATENTSCHRIFT**

(45) Veröffentlichungstag der Patentschrift :
15.06.88

(51) Int. Cl.⁴ : **F 16 B 21/02**

(21) Anmeldenummer : 86100868.8

(22) Anmeldetag : 23.01.86

(54) **Vorrichtung zum Sichern einer Verbindung.**

(30) Priorität : 14.02.85 CH 665/85

(43) Veröffentlichungstag der Anmeldung :
17.09.86 Patentblatt 86/38

(45) Bekanntmachung des Hinweises auf die Patenterteilung : 15.06.88 Patentblatt 88/24

(84) Benannte Vertragsstaaten :
CH DE FR GB IT LI SE

(56) Entgegenhaltungen :
CH-A- 195 403
DE-B- 1 023 928
GB-A- 2 069 109
US-E- 30 801

(73) Patentinhaber : Werkzeugmaschinenfabrik Oerlikon-
Bührle AG
Birchstrasse 155
CH-8050 Zürich (CH)

(72) Erfinder : Bruderer, Werner, Ing.HTL
Schwandenholzstrasse 244
CH-8052 Zürich (CH)

EP 0 194 422 B1

## Beschreibung

Die Erfindung betrifft eine Vorrichtung zum Sichern einer Verbindung, insbesondere einer sogenannten Drehverbindung, mit einem Gehäuse (10) enthaltend :
- einen Bolzen (14), der in das Gehäuse (10) eingesetzt ist, mit einer unteren Fläche (14a) ;
- dieser Bolzen (14) ist durch Drehung um einen bestimmten Winkel am Gehäuse (10) befestigt ;
- die Sicherungsvorrichtung verhindert, dass der Bolzen (14) in unbeabsichtigter Weise aus dem Gehäuse (10) herausfallen kann, indem sich der Bolzen (14) in unbeabsichtigter Weise gegenüber dem Gehäuse (10) dreht.

Bei einer bekannten Vorrichtung dieser Art (siehe US-E-30 801) ist ein Befestigungsorgan für eine lösbare Verbindung vorhanden. Dieses Organ wird in ein Sackloch hineingesteckt und um 90° gedreht, um eine Platte an einem Träger zu befestigen, wobei Mittel vorhanden sind, um das Organ lösbar in der Platte festzuhalten. Bei der Drehung um 90° in einer Richtung wird ein Querstift im Träger eingerastet und bei der Drehung um 90° in der anderen Richtung wird dieser Querstift wieder ausgerastet.

Bei einer anderen Vorrichtung (siehe GB-A-20 69 109) ist eine Führungsrolle drehbar auf einem Bolzen gelagert. Dieser Bolzen ist mit Hilfe eines Stiftes, der quer durch das untere Ende des Bolzens hindurchragt, in einem Gehäuse befestigt, das ebenfalls den hinteren Teil des Verschlusses einer Gatlingkanone darstellt. Diese bekannte Vorrichtung eignet sich nur für kleine Kräfte. Der Befestigungsstift hat den Nachteil, dass er nur in sehr umständlicher Weise gelöst werden kann. Bei der Wiederbefestigung des Bolzens im Gehäuse muss dieser Stift durch einen neuen Stift ersetzt werden.

Die Aufgabe, welche mit der vorliegenden Erfindung gelöst werden soll, besteht in der Schaffung einer Sicherungsvorrichtung, welche den oben erwähnten Nachteil nicht aufweist und bei welcher der zu sichernde Teil ohne zusätzliche Massnahme nach dem Einsetzen gesichert ist und sich nicht mehr selber lösen kann. Anderseits soll sich aber der gesicherte Teil auch ohne zusätzliche Massnahme wieder lösen lassen, wenn der Bolzen gelöst werden soll.

Die erfindungsgemässe Vorrichtung, mit der diese Aufgabe gelöst wird, ist dadurch gekennzeichnet, dass
- das Gehäuse (10) mindestens eine Nut (23, 24) im Bereich der unteren Fläche (14a) des Bolzens (14) aufweist ;
- der Bolzen (14) eine Nut (26) an der unteren Fläche (14a) aufweist ;
- die Sicherungsvorrichtung ein Sicherungsorgan (20) aufweist, das verschiebbar in der mindestens einen Nut (23, 24) des Gehäuses (10) geführt ist ;
- eine Feder (31) vorhanden ist, um das Sicherungsorgan (20) in Eingriff mit der Nut (26) des Bolzens (14) zu bringen ;

- ein Betätigungsstift (27) vorhanden ist, der am Sicherungsorgan (20) befestigt ist ; und
- der Betätigungsstift (27) zum Verschieben des Sicherungsorganes (20) entgegen der Kraft der Feder (31) dient.

Ein Ausführungsbeispiel der erfindungsgemässen Vorrichtung zum Sichern einer Verbindung ist im folgenden anhand der beigefügten Zeichnung ausführlich beschrieben. Es zeigt :

Fig.1 einen Längsschnitt durch die erfindungsgemässe Sicherungsvorrichtung,

Fig.2 eine Ansicht der in Fig.1 dargestellten Vorrichtung von oben und

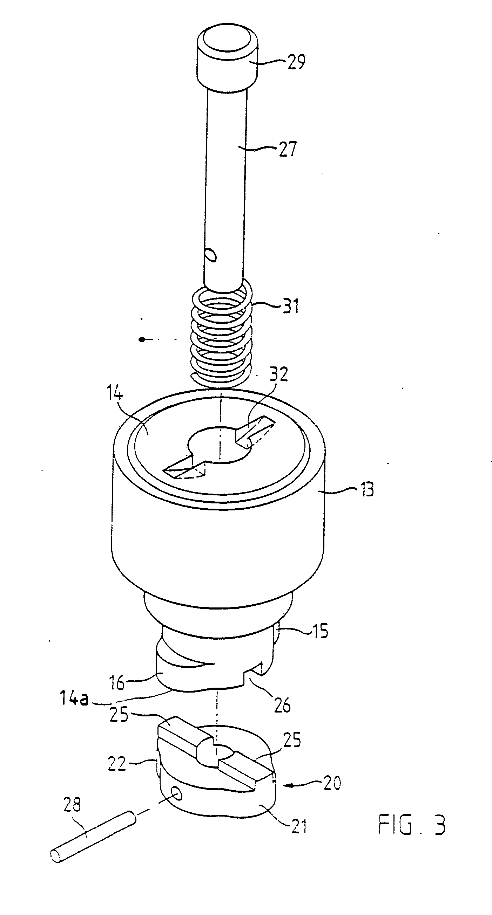

Fig.3 einzelne Teile der Vorrichtung in schaubildlicher Darstellung.

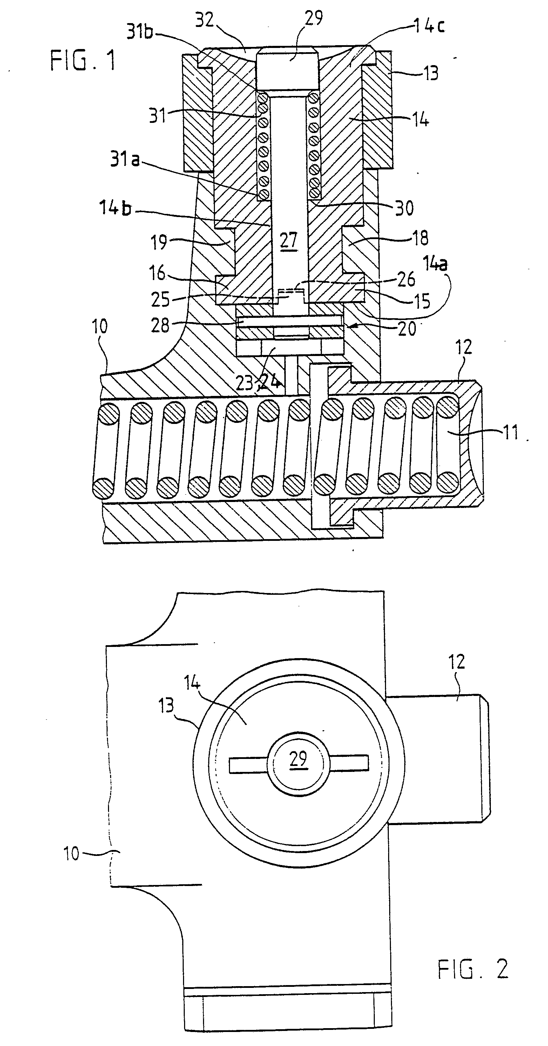

Gemäss Fig.1 ist vom Verschluss einer Gatling-Kanone, deren Aufbau hier nicht von Bedeutung ist, der hintere Gehäuseteil 10 gezeigt. In diesem hinteren Gehäuseteil 10 befindet sich eine Feder 11, die zum Verschieben eines nicht dargestellten Zündstiftes dient. Diese Feder 11 stützt sich auf einem im Gehäuseteil 10 befestigten topfartigen Deckel 12 ab.

Ferner ist am hinteren Gehäuseteil 10 eine Führungsrolle 13 drehbar auf einem Bolzen 14 gelagert. Dieser Bolzen 14 wird durch Drehung um seine Längsachse um 90° im Gehäuseteil 10 befestigt. Zu diesem Zweck weist der Bolzen 14 an seinem unteren Ende zwei Segmente 15 und 16 auf, die sich auf entsprechende Segmente 18 und 19 im Innern des Gehäuses 10 abstützen. In der gezeigten Stellung der Bolzen 14 werden seine Segmente 15 und 16 durch die Segmente 18 und 19 des Gehäuseteiles 10 gehalten. Die Rolle 13 kann sich auf dem Bolzen 14 drehen.

Die im folgenden beschriebene Sicherungsvorrichtung hat die Aufgabe zu verhindern, dass sich der Bolzen 14 im Gehäuseteil 10 dreht und in unbeabsichtigter Weise herausfällt. Diese Sicherungsvorrichtung weist ein Sicherungsorgan 20 auf, das mit zwei Armen 21 und 22 in Nuten 23 und 24 des Gehäuseteiles 10 eingreift. Zwei Rippen, von denen in Fig.1 jedoch nur die eine Rippe 25 sichtbar ist, greifen in je eine Nut 26 am unteren Ende des Bolzens 14 ein. Da die beiden, einander diametral gegenüberliegenden Arme 21 und 22 in die Nuten 23 und 24 eingreifen, lässt sich das Sicherungsorgan nicht drehen und da die beiden, einander diametral gegenüberliegenden Rippen 25 in die Nut 26 des Bolzens 14 eingreifen, kann sich auch der Bolzen 14 nicht drehen. Am Sicherungsorgan 20 ist ein Betätigungsstift 27 mit Hilfe eines Sicherungsstiftes 28 befestigt.

Der Betätigungsstift 27 weist an seinem oberen Ende einen Kopf 29 auf und ragt durch eine axiale Bohrung des Bolzens 14 hindurch. Die axiale Bohrung des Bolzens 14 besitzt eine Schulter 30, auf der sich eine Feder 31 mit ihrem einen Ende abstützt. Das andere Ende der Feder 31 stützt sich am Kopf 29 des Betätigungsstiftes 27 ab. Die Feder 31 hat das Bestreben, den Betätigungsstift 27 mit dem Sicherungsorgan 20 nach oben zu drücken, bis die Rippe 25 des Sicherungsorgans 20 in die Nut 26 des Bolzens 14 eingreift. Der Bolzen 14 weist an seinem oberen Ende einen Schlitz oder eine Nut 32 auf, in welche der Kopf 29 des Betätigungsstiftes 27 hineinragt (siehe auch Fig.2). Die Nut 32 ermöglicht es, mit Hilfe eines Werkzeuges, z. B. einem Schraubenzieher den Bolzen 14 im Gehäuseteil 10 zu drehen. Dabei stösst der Schraubenzieher gegen den Kopf 29, wodurch der Betätigungsstift 27 und das Sicherungsorgan 20 heruntergedrückt werden. Sobald die Rippen 25 nicht mehr mit den Nuten 26 in Eingriff stehen, kann der Bolzen 14 gedreht werden.

Die Wirkungsweise der beschriebenen Sicherungsvorrichtung ist wie folgt :

Bevor der Bolzen 14 in das Gehäuse 10 eingesetzt werden kann, muss darauf geachtet werden, dass das drehbare Sicherungsorgan 20, das am Bolzen 14 befestigt ist, so gedreht ist, dass die Rippen 25 quer zu den Nuten 26 an der unteren Stirnfläche des Bolzens 14 gerichtet sind. Anschliessend kann der Bolzen 14 in das Gehäuse 10 eingesetzt werden, dabei ragen die anderen Arme 21, 22 des Sicherungsorganes 20 in die Nuten 23 und 24 des Gehäuses 10, sodass sich das Sicherungsorgan 20 nicht mehr drehen lässt. Wird dann der Bolzen 14 um 90° gedreht, so dreht er sich auch relativ zum Sicherungsorgan 20 bis die Rippen 25 in die Nuten 26 des Bolzens 14 einrasten, wie aus Fig.1 ersichtlich ist. Dadurch ragt nun auch der Kopf 29 des Betätigungsstiftes 27 in die Nut 32 des Bolzens 14 und der Bolzen 14 ist gesichert. Zum Lösen des Bolzens 14 wird ein Werkzeug in den Schlitz 32 eingesetzt, wodurch der Betätigungsstift 27 zusammen mit dem Sicherungsorgan 20, entgegen der Kraft der Feder 31, heruntergedrückt wird, wobei die Rippen 25 des Sicherungsorganes 20 aus den Nuten 26 des Bolzens 14 herausgedrückt werden und der Bolzen 14 sich frei drehen und entfernen lässt.

**Patentansprüche**

1. Vorrichtung zum Sichern einer Verbindung, insbesondere einer sogenannten Drehverbindung, mit einem Gehäuse (10) enthaltend :
- einen Bolzen (14), der in das Gehäuse (10) eingesetzt ist, mit einer unteren Fläche (14a) ;
- dieser Bolzen (14) ist durch Drehung um einen bestimmten Winkel am Gehäuse (10) befestigt ;
- die Sicherungsvorrichtung verhindert, dass der Bolzen (14) in unbeabsichtigter Weise aus dem Gehäuse (10) herausfallen kann, indem sich der Bolzen (14) in unbeabsichtigter Weise gegenüber dem Gehäuse (10) dreht, dadurch gekennzeichnet, dass
- das Gehäuse (10) mindestens eine Nut (23, 24) im Bereich der unteren Fläche (14a) des Bolzens (14) aufweist ;
- der Bolzen (14) eine Nut (26) an der unteren Fläche (14a) aufweist ;
- die Sicherungsvorrichtung ein Sicherungsorgan (20) aufweist, das verschiebbar in der mindestens einen Nut (23, 24) des Gehäuses (10) geführt ist ;
- eine Feder (31) vorhanden ist, um das Sicherungsorgan (20) in Eingriff mit der Nut (26) des Bolzens (14) zu bringen ;
- ein Betätigungsstift (27) vorhanden ist, der am Sicherungsorgan (20) befestigt ist ; und
- der Betätigungsstift (27) zum Verschieben des Sicherungsorganes (20) entgegen der Kraft der Feder (31) dient.

2. Vorrichtung nach Anspruch 1, dadurch gekennzeichnet, dass
- der Bolzen (14) eine axiale Bohrung (14b) aufweist, durch welche der Betätigungsstift (27) hindurchragt.

3. Vorrichtung nach Anspruch 2, dadurch gekennzeichnet, dass
- der Bolzen (14) zwei einander gegenüberliegende Stirnflächen (14a und 14c) aufweist, welche eine erste Stirnfläche (14a) und eine zweite Stirnfläche (14c) bilden ;
- die Nuten (23, 24) des Bolzens (14) sich an der Stirnfläche befinden, welche die untere Stirnfläche (14a) bildet ;
- eine weitere Nut (32) sich an der anderen Stirnfläche (14c) des Bolzens (14) befindet, wobei
- die weitere Nut (32) an der anderen Stirnfläche (14c) des Bolzens (14) zur Drehung des Bolzens (14) dient, und
- der Betätigungsstift (27) in diese weitere Nut (32) hineinragt.

4. Vorrichtung nach Anspruch 3, dadurch gekennzeichnet, dass
- der Betätigungsstift (27) gegenüberliegende Enden aufweist ;
- das Sicherungsorgan (20) an einem Ende des Betätigungsstiftes (27) befestigt ist, ;
- ein Kopf (29) am anderen Ende des Betätigungsstiftes (27) befestigt ist ;
- die axiale Bohrung (14b) des Bolzens (14) eine Schulter (31a) aufweist ;
- die genannte Feder (31) zwei Enden aufweist ; und
- diese Feder (31) sich mit einem Ende auf den Kopf (29) des Betätigungsstiftes (27) abstützt und sich mit dem anderen Ende auf der Schulter (31a) der axialen Bohrung (14b) des Bolzens (14) abstützt.

5. Vorrichtung nach Anspruch 4, dadurch gekennzeichnet, dass
- das Sicherungsorgan (20) zwei einander gegenüberliegende Arme (21, 22) aufweist ;
- die Nut (23, 24) des Gehäuses (10) aus zwei einander gegenüberliegenden Nuten (23, 24) besteht, in welche die Arme (21, 22) des Sicherungsorganes (20) hineinragen ;
- die Nut (26) an der unteren Stirnfläche (14a) des Bolzens (14) aus zwei einander gegenüberliegenden Nuten (26) besteht ; und
- das Sicherungsorgan (20) zwei gegenüberliegende Rippen (25) aufweist, welche in die Nuten (26) an der unteren Stirnfläche (14a) des Bolzens (14) hineinragen.

## Claims

1. Device for locking a connection, especially a so-called twist connection, having a casing (10) containing :
- a bolt (14) which is introduced into the casing (10), having a lower face (14a) ;
- said bolt (14) is fixed to the casing (10) by rotating it through a given angle ;
- the locking device prevents the bolt (14) from being able to accidentally fall out of the casing (10) by reason of the bolt (14) accidentally rotating with respect to the casing (10), characterised in that
- the casing (10) exhibits at least one groove (23, 24) in the region of the lower face (14a) of the bolt (14) ;
- the bolt (14) exhibits a groove (26) on the lower face (14a) ;
- the locking device exhibits a locking member (20) which is displaceably guided in the at least one groove (23, 24) of the casing (10) ;
- a spring (31) is provided to bring the locking member (20) into engagement with the groove (26) of the bolt (14) ;
- an operating pin (27) is provided which is fixed to the locking member (20) ; and
- the operating pin (27) serves to displace the locking member (20) against the force of the spring (31).

2. Device according to claim 1, characterised in that
- the bolt (14) exhibits an axial drill hole (14b), through which the operating pin (27) projects.

3. Device according to claim 2, characterised in that
- the bolt (14) exhibits two opposed end faces (14a and 14c) which constitute a first end face (14a) and a second end face (14c) ;
- the grooves (23, 24) of the bolt (14) are situated on the end face constituting the lower end face (14a) ;
- a further groove (32) is situated on the other end face (14c) of the bolt (14),
- said further groove (32) on the other end face (14c) of the bolt (14) serving to rotate the bolt (14), and
- the operating pin (27) projects into said further groove (32).

4. Device according to claim 3, characterised in that
- the operating pin (27) exhibits opposing ends ;
- the locking member (20) is fixed to one end of the operating pin (27) ;
- a head (29) is fixed to the other end of the operating pin (27) ;
- the axial drill hole (14b) of the bolt (14) exhibits a shoulder (31a) ;
- said spring (31) exhibits two ends ; and
- this spring (31) rests with one end on the head (29) of the operating pin (27) and with the other end on the shoulder (31a) of the axial drill hole (14b) of the bolt (14).

5. Device according to claim 4, characterised in that
- the locking member (20) exhibits two opposing arms (21, 22) ;
- the groove (23, 24) of the casing (10) consists of two opposing grooves (23, 24), into which the arms (21, 22) of the locking member (20) project ;
- the groove (26) on the lower end face (14a) of the bolt (14) consists of two opposing grooves (26) ; and
- the locking member (20) exhibits two opposing ribs (25), which project into the grooves (26) on the lower end face (14a) of the bolt (14).

## Revendications

1. Dispositif permettant de bloquer un assemblage, notamment ce que l'on appelle un assemblage rotatif, comportant un boîtier (10) dans lequel se trouve un tourillon (14) qui est mis en place dans le boîtier (10) et qui comporte une face intérieure (14a), ce tourillon (14) étant fixé sur le boîtier (10) en le faisant tourner d'un angle déterminé, le dispositif de blocage empêchant que le tourillon (14) puisse tomber de façon inopinée hors du boîtier (10) du fait que ce tourillon (14) tourne de façon inopinée par rapport au boîtier (10), dispositif caractérisé en ce que :
- le boîtier (10) comporte au moins une gorge (23, 24) au voisinage de la face inférieure (14a) du tourillon (14),
- le tourillon (14) comporte une gorge (26) sur sa face inférieure (14a),
- le dispositif de blocage comporte un organe de blocage (20), qui est guidé de façon à pouvoir coulisser dans la gorge ou les gorges (23, 24) du boîtier (10),
- il est prévu un ressort (31) pour amener l'organe de blocage (20) en prise avec la gorge (26) du tourillon (14),
- il est prévu une broche de manœuvre (27) qui est fixée sur l'organe de blocage (20), cette broche de manœuvre (27) permettant de faire coulisser l'organe de blocage (20) contre l'action du ressort (31).

2. Dispositif selon la revendication 1, caractérisé en ce que le tourillon (14) comporte un perçage axial (14b) à travers lequel passe la broche de manœuvre (27).

3. Dispositif selon la revendication 2, caractérisé en ce que :
- le tourillon (14) comporte deux faces frontales (14a et 14c) opposées l'une à l'autre, qui constituent une première face frontale (14a) et une seconde face frontale (14c),
- les gorges (23, 24) du tourillon (14) se trouvent sur la face frontale qui constitue la face frontale inférieure (14a),
- une autre gorge (32) se trouve sur l'autre face frontale (14c) du tourillon (14),
- cette autre gorge (32) sur l'autre face frontale (14c) du tourillon (14) sert à faire tourner le tourillon (14),
- la broche de manœuvre (27) fait saillie à

l'intérieur de cette deuxième gorge (32).

4. Dispositif selon la revendication 3, caractérisé en ce que :

- la broche de manœuvre (27) comporte des extrémités opposées,

- l'organe de blocage (20) est fixé à une extrémité de la broche de manœuvre (27),

- une tête (29) est fixée à l'autre extrémité de la broche de manœuvre (27),

- le perçage axial (14b) du tourillon (14) comporte un épaulement (31a),

- le ressort précité (31) comporte deux extrémités,

- ce ressort (31) prend appui par l'une de ses extrémités sur la tête (29) de la broche de manœuvre (27), et prend appui par son autre extrémité, sur l'épaulement (31a) du perçage axial (14b) du tourillon (14).

5. Dispositif selon la revendication 4, caractérisé en ce que :

- l'organe de blocage (20) comporte deux bras opposés l'un à l'autre (21, 22),

- la gorge (23, 24) du boîtier (10) est constituée par deux gorges opposées l'une à l'autre (23, 24) dans lesquelles pénètrent les bras (21, 22) de l'organe de blocage (20),

- la gorge (26) sur la face frontale inférieure (14a) du tourillon (14) est constituée par deux gorges (26) opposées l'une à l'autre.

- l'organe de blocage (20) comporte deux nervures opposées l'une à l'autre (25) qui pénètrent dans les gorges (26) sur la face frontale inférieure (14a) du tourillon (14).

FIG. 1

31b  32  29  14c
13
31
14
31a
14b  30
19  18
16  14a
25  26
28  15
10  20
23 24
12
11

FIG. 2

14
13
29
12
10

1

FIG. 3